# FASCICULE DE BREVET EUROPEEN

(11) **EP 2 337 713 B1**
(45) Date de publication et mention de la délivrance du brevet: **29.01.2014**
(21) Numéro de dépôt: 09737441.7
(22) Date de dépôt: 22.10.2009
(51) Int. Cl.: B60R 25/02

(54) **DISPOSITIF ANTIVOL POUR COLONNE DE DIRECTION**
DIEBSTAHLSCHUTZVORRICHTUNG FÜR EINE LENKSÄULE
ANTITHEFT DEVICE FOR A STEERING COLUMN

(30) Priorité: 23.10.2008 FR 0805885; 10.12.2008 FR 0806917
(43) Date de publication de la demande: 29.06.2011
(73) Titulaire: Valeo Sécurité Habitacle, 94046 Créteil Cedex (FR)
(72) Inventeur: MALTAVERNE, Frederic, F-94042 Créteil (FR); PERRIN, Christophe, F-94042 Créteil (FR)
(74) Mandataire: Croonenbroek, Thomas Jakob
(86) Numéro de dépôt international: PCT/EP2009/063874
(87) Numéro de publication internationale: WO 2010/046432

(56) Documents cités:
- EP-A- 0 705 744
- DE-B1- 2 644 312
- DE-T2- 69 907 110
- DE-U1- 9 208 698

## Description

La présente invention est relative à un dispositif antivol pour colonne de direction.

L'invention trouve une application particulièrement avantageuse dans le domaine automobile.

Il est connu d'utiliser un dispositif antivol pour immobiliser en rotation une colonne de direction de véhicule automobile. Cette immobilisation est généralement réalisée à l'aide d'un pêne qui est monté mobile dans le dispositif antivol. Le déplacement du pêne est réalisé par l'intermédiaire d'un coulisseau qui est commandé par un verrou. Le verrou est solidarisé avec le dispositif antivol et permet, via le coulisseau, de déverrouiller le pêne de la position où il bloque en rotation la colonne de direction.

Par un geste de malveillance, une personne pourrait désolidariser le verrou afin d'accéder au coulisseau. En ayant accès à ce coulisseau, la personne malveillante pourrait déplacer le pêne de sa position où il bloque la colonne de direction vers une position de repos.

Pour limiter cet inconvénient, il a été proposé dans le document FR 2 909 953 des moyens supplémentaires de blocage. Ces moyens supplémentaires de blocage comprennent un élément de blocage, qui sous l'action d'un ressort, se déplace dans une position où il peut bloquer le pêne en translation.

Ces moyens supplémentaires de blocage sont agencés dans le dispositif antivol de telle manière qu'ils sont difficiles d'accès. Cependant cet agencement particulier a pour conséquence de limiter les dimensions de ces moyens supplémentaires. Ainsi, en cas de charges violentes sur le pêne générées par la personne malveillante, ces moyens supplémentaires de blocage peuvent à terme ne plus assurer leur fonction.La colonne de direction n'est plus alors immobilisée en rotation.

Un autre dispositif antivol pour colonne de direction est connu du EP-A-705744.

Il existe un besoin d'améliorer la fonction de blocage de ces moyens supplémentaires en rendant plus difficile leur désactivation par un utilisateur malveillant.

L'invention concerne un dispositif antivol pour une colonne de direction de véhicule automobile comportant un pêne monté mobile en translation dans le dispositif antivol destiné à bloquer en rotation la colonne de direction, un verrou solidarisé avec le dispositif antivol et agencé pour déplacer le pêne, des moyens de blocage déplaçables, en cas de désolidarisation du verrou avec le dispositif antivol, entre une position de repos et une position active dans laquelle les moyens de blocage bloquent en translation ledit pêne. Le dispositif antivol comprend en outre des moyens de maintien des moyens de blocage dans leur position active pour empêcher un changement de position desdits moyens de blocage depuis leur position active.

Les moyens de blocage comprennent une plaquette et des premiers moyens à ressort aptes à solliciter ladite plaquette vers la position active.

Les moyens de maintien comprennent un étrier et des seconds moyens à ressort aptes à solliciter ledit étrier vers une position dans laquelle l'étrier maintient les moyens de blocage dans la position active.

L'invention permet ainsi de maintenir les moyens de blocage dans leur position active. La fonction de blocage de ces moyens est alors améliorée car leur désactivation par une personne malveillante est plus difficile.

En outre, même dans le cas où cette personne malveillante pourrait agir sur les moyens de blocage, elle ne pourrait pas faire revenir ces moyens de blocage dans leur position de repos. En effet, les moyens de maintien forment un ensemble irréversible empêchant tout retour en position de repos des moyens de blocage.

Dans une variante de réalisation, la plaquette délimite une fenêtre dans laquelle le pêne est apte à s'introduire, ladite plaquette étant en outre agencée pour venir se loger, en position active, dans une rainure formée dans ledit pêne lorsqu'il est introduit dans la fenêtre de la plaquette.

La plaquette peut ainsi bloquer le pêne en position active.

Dans une variante de réalisation, la plaquette comprend deux pattes agencées pour guider les premiers moyens à ressort lorsque lesdits premiers moyens à ressort sollicitent ladite plaquette vers la position active.

Les premiers moyens à ressort sont ainsi guidés de manière simple et pratique.

Dans une variante de réalisation, la plaquette comprend deux encoches sur deux montants délimitant la fenêtre, lesdites encoches agissant comme des zones de rupture de la plaquette.

Dans une variante de réalisation, la plaquette est agencée pour être maintenue dans la position de repos par un pion relié au verrou, de sorte que lorsque le verrou est désolidarisé du dispositif antivol, le pion se déplace en libérant la plaquette.

Les moyens de blocage sont ainsi libérés automatiquement de la position de repos dès lors que le verrou est désolidarisé du dispositif antivol.

Dans une variante de réalisation, l'étrier comprend deux branches comportant chacune une partie interne en saillie destinée à venir respectivement en contact avec les pattes de la plaquette.

Grâce aux parties en saillie, il est possible de maintenir les moyens de blocage dans leur position active. Ces parties en saillie sont agencées sur l'étrier de sorte que lorsque les moyens de blocage sont dans une position de repos, celles-ci sont décalées vis-à-vis des moyens de blocage.

Dans une variante de réalisation, la surface de contact des parties en saillie possède un faible coefficient de frottement de sorte à limiter la transmission des sollicitations transversales de la plaquette sur l'étrier.

On s'assure ainsi que la plaquette ne peut pas faire revenir l'étrier dans sa position d'origine. On empêche ainsi tout retour des moyens de blocage dans une position de repos.

Dans une variante de réalisation, les premiers moyens à ressort et les seconds moyens à ressort forment des lames élastiques respectivement solidaires de la plaquette et de l'étrier.

Dans une variante de réalisation, le dispositif antivol comprend un corps d'antivol agencé pour loger le verrou, ledit corps d'antivol étant formé dans un matériau léger tel qu'un matériau en alliage de magnésium ou un matériau plastique haute performance chargé en fibres de verre. Le dispositif antivol comprend également un demi-collier solidarisé avec le corps d'antivol et dans lequel le pêne est mobile en translation, ledit demi-collier étant formé dans un matériau résistant tel que le « zamak » (marque déposée).

Un autre objet concerne une colonne de direction comportant un dispositif antivol conformément à l'invention.

D'autres caractéristiques et avantages de l'invention ressortiront de la description suivante, donnée à titre d'exemple, sans caractère limitatif, en regard des dessins annexés sur lesquels :
- la figure 1 représente une vue en perspective d'un dispositif antivol conforme à l'invention;
- la figure 2 représente une vue en coupe partielle du dispositif antivol de la figure 1 dans une situation où les moyens de blocage sont dans une position de repos;
- la figure 3 représente une première vue en perspective partielle des moyens de maintien dans une situation où les moyens de blocage sont dans une position de repos;
- la figure 4 représente une seconde vue en perspective partielle des moyens de maintien dans une situation où les moyens de blocage sont dans une position de repos;
- la figure 5 représente une vue en perspective partielle des moyens de maintien dans une situation où les moyens de blocage sont dans une position active;
- la figure 6 représente une vue en perspective partielle d'une variante d'un mode de réalisation des moyens de blocage.

Dans la description qui va suivre, des éléments sensiblement identiques ou similaires seront désignés par des références identiques.

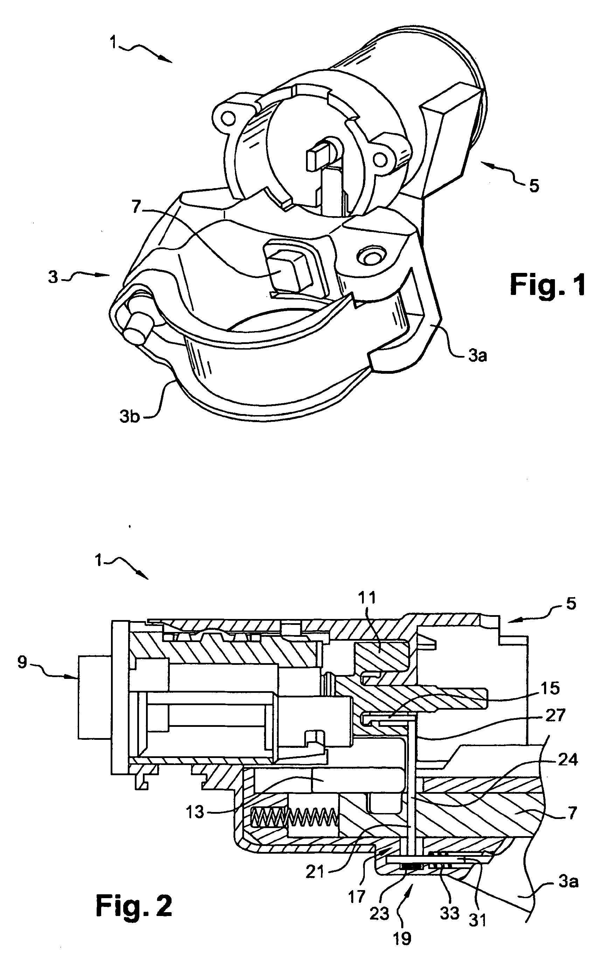

La figure 1 présente une vue en perspective d'un dispositif antivol 1 conforme à l'invention.

Le dispositif antivol comprend un collier 3 fixé à un corps d'antivol 5. Plus particulièrement, le collier 3 est fixé au corps d'antivol 5 par un premier demi-collier 3a. Le premier demi-collier 3a présente la forme d'un demi-cylindre.

Le collier 3 comprend en outre un second demi-collier 3b ayant également la forme d'un demi-cylindre.

Le premier demi-collier 3a et le second demi-collier 3b définissent un espace interne dans lequel la colonne de direction (non représentée) peut s'étendre.

Le second demi-collier 3b est fixé à ses extrémités au premier demi-collier 3a.

Par une de ses extrémités, le second demi-collier 3b est fixé au premier demi-collier 3a à l'aide d'une charnière. Cette charnière comprend un axe solidaire du premier demi-collier 3a s'étendant verticalement.

Le second demi-collier 3b est également fixé au premier demi-collier 3a par une autre extrémité à l'aide de moyens de fixation.

Le collier 3 forme ainsi un espace interne dans laquelle la colonne de direction peut tourner. Afin de bloquer cette rotation, par exemple pour éviter le vol du véhicule, le premier demi-collier 3a comporte un logement de guidage débouchant dans l'espace interne du collier 3 et dans lequel un pêne 7 peut coulisser.

Le pêne 7 a la forme globale d'une barre présentant une section sensiblement carrée.

L'extrémité du pêne 7 présente une forme complémentaire à un orifice logé dans la colonne de direction, de sorte que lorsque le pêne s'étend dans l'espace interne, il peut s'engager dans l'orifice de la colonne et bloquer ainsi tout mouvement de rotation de cette colonne.

Le premier demi-collier 3a constitue une partie sensible, d'un point de vue sécurité, du dispositif antivol 1. Le premier demi-collier 3a comporte en effet le logement de guidage du pêne 7 qu'il est nécessaire de protéger de tout acte de malveillance. Ce premier demi-collier 3a est ainsi réalisé dans un matériau résistant. Ce matériau est par exemple un alliage de zinc et d'aluminium, tel que le « zamak » (marque déposée).

Le corps d'antivol 5 peut lui aussi être réalisé en « zamak » (marque déposée). Cependant, afin de limiter le poids global du dispositif antivol 1, le corps d'antivol 5 peut être constitué par un matériau plus léger, tel qu'un matériau en alliage de magnésium ou un matériau plastique haute performance chargé en fibres de verre.

La figure 2 présente le dispositif antivol de la figure 1 dans une coupe partielle.

Sur cette figure, le corps d'antivol 5 loge un verrou 9 comportant un rotor et un stator de sorte que lorsque l'utilisateur tourne la clé de contact, cette clé entraîne le rotor du verrou.

Le rotor est agencé pour entraîner en rotation une came 11. La came 11 est également maintenue en translation dans le corps d'antivol 5 par le verrou 9.

La came 11 est agencée pour déplacer en translation un coulisseau 13 lorsqu'elle tourne.

Lorsque l'utilisateur tourne la clé de contact pour démarrer le véhicule, le rotor du verrou 9 entraîne la came qui déplace le coulisseau 13. Le coulisseau 13 entraîne alors en translation le pêne 7 de sorte à déplacer le pêne 7 dans une position où celui-ci ne bloque plus en rotation la colonne de direction. Le pêne est maintenu dans cette position durant tout le fonctionnement du véhicule.

Inversement, lorsque l'utilisateur tourne la clé de contact et la retire du verrou 9, un ressort pousse le pêne pour bloquer en rotation la colonne de direction.

Le corps d'antivol 5 loge également un pion 15 qui est en relié au verrou 9 par l'intermédiaire de la came 11. Le pion 15 permet de maintenir dans une position de repos des moyens de blocage 17. Le pion 15 est un élément séparé du verrou 9. Dans une variante de réalisation, le pion 15 est une partie intégrante du verrou 9.

Ces moyens de blocage 17 sont destinés à verrouiller en translation le pêne 7 lorsque le verrou 9 est désolidarisé du corps d'antivol 5 ou lorsque le corps d'antivol 5 est arraché.

Lorsque les moyens de blocage 17 sont dans une position active, c'est à dire dans une position où ils bloquent en translation ledit pêne, ils sont maintenus dans cette position par des moyens de maintien 19. Ces moyens de maintien 19 sont destinés à empêcher tout changement de position des moyens de blocage 17 depuis leur position active.

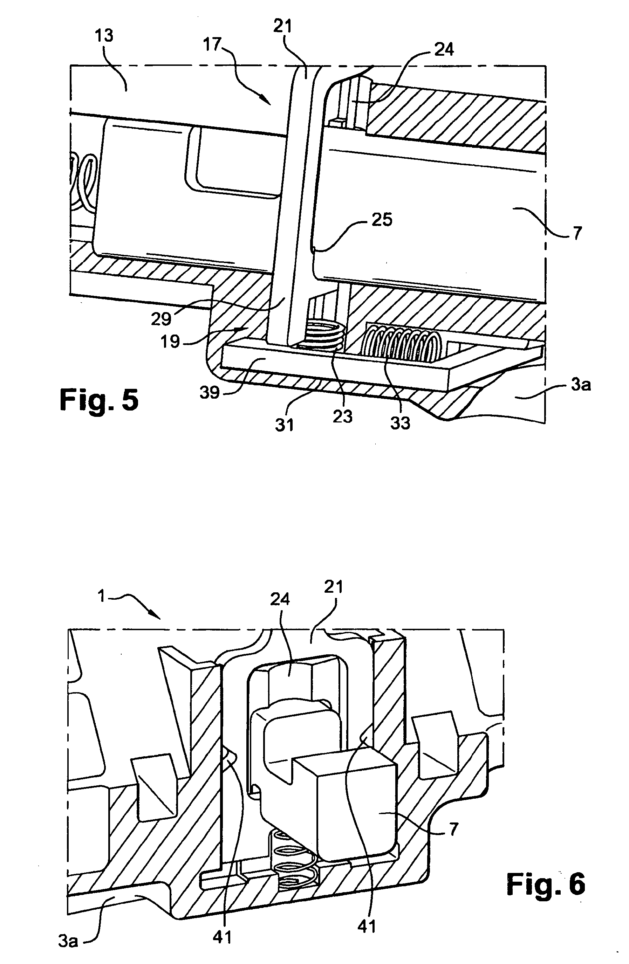

La figure 5 présente une vue dans laquelle les moyens de blocage 17 et les moyens de maintien 19 sont détaillés.

Les moyens de blocage 17 comprennent une plaquette 21 et des premiers moyens à ressort 23.

La plaquette 21 délimite une fenêtre 24 dans laquelle le pêne 7 est apte à s'introduire. Ainsi, lorsque la plaquette 21 est montée dans le dispositif antivol 1, elle peut, grâce à cette fenêtre 24, se présenter transversalement par rapport à l'axe de translation du pêne 7.

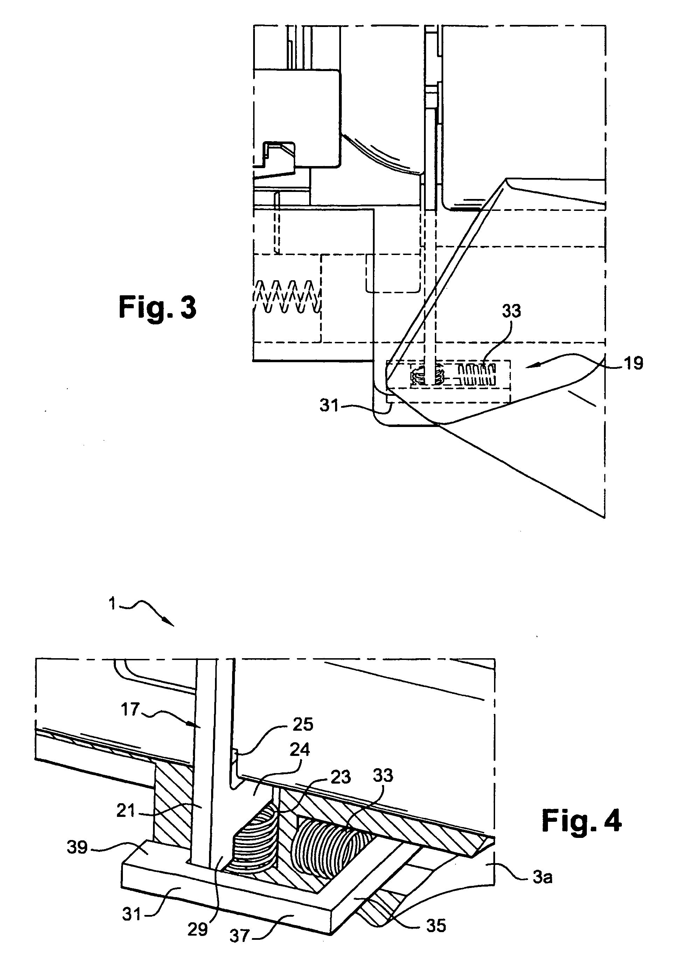

La fenêtre 24 présente une largeur interne supérieure à la hauteur du pêne 7 de sorte que cette fenêtre peut se déplacer vis-à-vis du pêne 7 lorsque la plaquette 21 n'est plus en position de repos. Lors d'un déplacement de la plaquette 21 de la position de repos à la position active, celle-ci vient se loger dans une rainure 25 (visible également à la figure 4) formée dans le pêne 7. L'épaisseur de la plaquette 21 est adaptée pour venir se loger dans cette rainure 25.

La plaquette 21 comprend également une partie supérieure. Comme il est visible à la figure 2, cette partie supérieure se présente sous la forme d'une tige 27 qui s'étend verticalement de la fenêtre 24 jusqu'au pion 15.

La plaquette 21 comprend également une partie inférieure. Cette partie inférieure se présente sous la forme de deux pattes 29 (plus particulièrement visibles à la figure 5) qui s'étendent verticalement de la fenêtre 24 en direction de la partie basse du demi-collier 3a. Ces pattes 29 sont agencées de sorte à guider les premiers moyens à ressort 23.

La plaquette 21 est formée dans un matériau qui lui permet de résister à des fortes charges de la part du pêne 7, par exemple un matériau de type acier ou en tôle ondulée.

Les premiers moyens à ressort 23 sont adaptés pour solliciter la plaquette 21 vers la position active, c'est à dire vers la position dans laquelle les moyens de blocage 17 bloquent en translation le pêne 7. Grâce à ces premiers moyens à ressort 23, les moyens de blocage 17 peuvent se déplacer verticalement dans un espace délimité par le demi-collier 3a, le coulisseau 13, la came 11, le corps d'antivol 5 (visibles à la figure 2).

Les premiers moyens à ressort 23 se présentent ici sous la forme d'un ressort hélicoïdal dont l'une des extrémités est en contact avec la plaquette 21 et l'autre extrémité est en contact avec le demi-collier 3a.

Dans une variante de réalisation, les premiers moyens à ressort 23 se présentent sous la forme d'une lame élastique solidaire de la plaquette 21.

La figure 3 présente une vue en perspective des moyens de maintien 19.

Ces moyens de maintien 19 comprennent un étrier 31 et des seconds moyens à ressort 33.

La figure 4 présente plus en détail une partie de l'étrier 31.

L'étrier 31 comprend une base 35 à partir de laquelle s'étendent deux branches 37 (dont une seule est ici représentée). Chaque branche 37 comporte une partie interne en saillie 39. Les deux parties internes en saillie 39 des deux branches 37 se font face à l'intérieur de l'étrier 31.

L'étrier 31 est ici bloqué en position par la plaquette 21. Plus particulièrement, la plaquette 21 maintient l'étrier 31 en venant bloquer les parties internes en saillie 39 à l'aide des pattes 29 respectives.

Les seconds moyens à ressort 33 sont aptes à solliciter l'étrier 31 vers une position dans laquelle l'étrier 31 maintien les moyens de blocage 17 dans la position active. L'étrier 31 peut, grâce à ces seconds moyens à ressort 33, coulisser à l'intérieur du demi-collier 3a.

Les seconds moyens à ressort 33 se présentent ici sous la forme d'un ressort hélicoïdal dont l'une des extrémités est en contact avec la base 35 de l'étrier 31 et l'autre extrémité est en contact avec le demi-collier 3a. Les seconds moyens à ressort 33 ont ici une direction de déplacement transversale à la direction de déplacement des premiers moyens à ressort 23.

Dans une variante de réalisation, les seconds moyens à ressort 33 se présentent sous la forme d'une lame élastique solidaire de la base 35 de l'étrier 31.

Nous allons maintenant présenter plus en détail, le déplacement des différents composants constituant le dispositif antivol 1, lorsque l'utilisateur malveillant désolidarise le verrou 9 avec le reste du dispositif 1.

La figure 2 présente les moyens de blocage 17 du dispositif antivol 1 en position de repos.

Dans cette position de repos, la plaquette 21 est bloquée sur sa partie supérieure par le pion 15 et sur sa partie inférieure par les premiers moyens à ressort 23 que la plaquette 21 comprime.

La plaquette 21 maintient également l'étrier 31 dans une position où il comprime les seconds moyens à ressort 33.

En cas de désolidarisation du verrou 9 avec le dispositif antivol 1 ou en cas d'arrachement du corps d'antivol 5, la came 11 n'est plus maintenue en translation par le verrou 9. La came 11 se déplace entraînant alors avec elle le pion 15. Le déplacement du pion 15 libère la plaquette 21 qui sous l'action des premiers moyens à ressort 23, se déplace verticalement. La plaquette 21 s'introduit alors dans la rainure 25 du pêne 7.

En se déplaçant verticalement, la plaquette 21 libère l'étrier 31 qui sous l'action des seconds moyens à ressort 33 se déplace de telle sorte que les parties internes en saillie 39 viennent sous les pattes 29, comme il est représenté figure 5. Les parties internes en saillie 39 maintiennent alors la plaquette 21 en position active. Ainsi, même en cas d'accès au coulisseau 13 par la personne malveillante, le pêne est maintenu bloqué dans la colonne de direction grâce aux moyens de blocage 17 et aux moyens de maintien 19.

On notera que les surfaces de contact des parties internes en saillie 39 sont réalisées de sorte que les frottements entre ces surfaces et les pattes 29 associées sont faibles. Ainsi, on limite la transmission des sollicitations transversales de la plaquette 21 sur l'étrier 31 lorsque ladite plaquette 21 se déplace vis-à-vis de l'étrier 31, c'est à dire lorsque les moyens de blocage sont dans une position active et que la personne malveillante charge transversalement le pêne 7 en espérant pouvoir débloquer la colonne de direction.

En outre, l'agencement des parties internes en saillie 39 sous les pattes 29 est tel qu'on limite la formation d'un jeu entre les moyens de blocage et le pêne 7. La génération d'une fatigue sur les moyens de blocage 17 en cas de charges répétées du pêne 7 est ainsi limitée.

On notera également que même dans le cas où l'utilisateur malveillant à accès à la partie supérieure de la plaquette 21 (par exemple en arrachant le corps de l'antivol 5), il ne pourra pas désactiver les moyens de maintien 19. En effet, les moyens de maintien 19 agissent de manière irréversible de sorte qu'une fois que les parties internes en saillie 39 sont sous les pattes 29, il n'est plus possible de ramener l'étrier 31 dans sa position d'origine.

L'invention permet donc de fournir un dispositif antivol sécurisé même en cas de désolidarisation de certaines parties du dispositif antivol 1.

Dans une variante de réalisation de l'invention, il est possible de prévoir que les premiers moyens à ressort forment un ressort hélicoïdal dont une première extrémité est en contact avec la plaquette et une seconde extrémité est en contact avec des moyens de maintien, de telle sorte que lorsque la plaquette se déplace verticalement, les premiers moyens à ressort déplacent les moyens de maintien sous la plaquette. Dans cette configuration particulière, il n'y a pas besoin de seconds moyens à ressort.

Dans une variante de réalisation de l'invention présentée à la figure 6, on améliore la sécurité du dispositif antivol 1.

Dans cette variante, la partie de la plaquette 21 délimitant la fenêtre 24 comprend sur ses deux montants deux encoches 41. Ces encoches 41 sont dirigées vers le centre de la plaquette 21 et forment des zones de rupture de la plaquette 21. Ainsi, dans le cas où la personne malveillante charge le pêne transversalement, les efforts conjugués du pêne 7 et du demi-collier 3a sur la plaquette 21 entraînent une rupture de cette plaquette 21 au niveau des deux encoches 41. La partie inférieure de la plaquette 21 va alors rester dans sa position active sous l'action des moyens de maintien 19. Le pêne 7 reste en conséquence maintenu par la plaquette 21 dans la position où il bloque en rotation la colonne de direction.

Les encoches 41 agissent également dans le cas où la personne malveillante essaie d'arracher la plaquette 21 en tirant sur la tige supérieure 27 de cette plaquette 21 (visible à la figure 2), suite à un arrachement du corps d'antivol 5. Dans cette situation, les efforts de la personne malveillante sur la tige 27 provoque une torsion de la plaquette 21. Cette torsion entraîne à terme la rupture de la plaquette 21 au niveau des deux encoches 41.

Les encoches 41 jouent ainsi le rôle de fusibles en cas d'efforts trop importants sur la plaquette 21.

## Revendications

1. Dispositif antivol pour colonne de direction de véhicule automobile comportant :
- un pêne (7) monté mobile en translation dans le dispositif antivol (1) destiné à bloquer en rotation la colonne de direction;
- un verrou (9) solidarisé avec le dispositif antivol (1) et agencé pour déplacer le pêne (7);
- des moyens de blocage (17) déplaçables, en cas de désolidarisation du verrou (9) avec le dispositif antivol (1), entre une position de repos et une position active dans laquelle les moyens de blocage (17) bloquent en translation ledit pêne (7) ;
- des moyens de maintien (19) des moyens de blocage (17) dans leur position active pour empêcher un changement de position desdits moyens de blocage (17) depuis leur position active; **caractérisé en ce que** le dispositif antivol (1) comprend en outre: les moyens de blocage (17) comprenant une plaquette (21) et des premiers moyens à ressort (23) aptes à solliciter ladite plaquette (21) vers la position active, et les moyens de maintien (19) comprenant un étrier (31) et des seconds moyens à ressort (33) aptes à solliciter ledit étrier (31) vers une position dans laquelle l'étrier (31) maintient les moyens de blocage (17) dans la position active.

2. Dispositif antivol selon la revendication 1 dans lequel la plaquette (21) délimite une fenêtre (24) dans laquelle le pêne (7) est apte à s'introduire, ladite plaquette (21) étant en outre agencée pour venir se loger, en position active, dans une rainure (25) formée dans ledit pêne (7) lorsqu'il est introduit dans la fenêtre (24) de la plaquette (21).

3. Dispositif antivol selon l'une quelconque des revendications 1 ou 2 dans lequel la plaquette (21) comprend deux pattes (29) agencées pour guider les premiers moyens à ressort (23) lorsque lesdits premiers moyens à ressort (23) sollicitent ladite plaquette (21) vers la position active.

4. Dispositif antivol selon l'une quelconque des revendications 2 ou 3 dans lequel la plaquette (21) comprend deux encoches (41) sur deux montants délimitant la fenêtre (24), lesdites encoches agissant comme des zones de rupture de la plaquette (21).

5. Dispositif antivol selon l'une quelconque des revendications 1 à 4 dans lequel la plaquette (21) est agencée pour être maintenue dans la position de repos par un pion (15) relié au verrou (9), de sorte que lorsque le verrou (9) est désolidarisé du dispositif antivol le pion (15) se déplace en libérant la plaquette (21).

6. Dispositif antivol selon l'une quelconque des revendications précédentes dans lequel l'étrier (31) comprend deux branches (37) comportant chacune une partie interne en saillie (39) destinée à venir respectivement en contact avec les pattes (29) de la plaquette (21).

7. Dispositif antivol selon la revendication précédente dans lequel la surface de contact des parties internes en saillie (39) possède un faible coefficient de frottement de sorte à limiter la transmission des sollicitations transversales de la plaquette (21) sur l'étrier (31).

8. Dispositif antivol selon l'une quelconque des revendications 1 à 6 dans lequel les premiers moyens à ressort (23) et les seconds moyens à ressort (33) forment des lames élastiques solidaires respectivement de la plaquette (21) et de étrier (31).

9. Dispositif antivol selon l'une quelconque des revendications précédentes comprenant :
- un corps d'antivol (5) agencé pour loger le verrou (9), ledit corps d'antivol (5) étant formé dans un matériau léger tel qu'un matériau en alliage de magnésium ou un matériau plastique haute performance chargé en fibres de verre;
- un demi-collier (3a) solidarisé avec le corps d'antivol (5) et dans lequel le pêne (7) est mobile en translation, ledit demi-collier (3a) étant formé dans un matériau résistant tel que le « zamak » marque déposée.

10. Colonne de direction pour véhicule automobile **caractérisé en ce qu'**elle comporte un dispositif antivol selon l'une quelconque des revendications 1 à 9.

## Patentansprüche

1. Diebstahlsicherungsvorrichtung für eine Lenksäule eines Kraftfahrzeugs, die Folgendes umfasst:
- einen in der Diebstahlsicherungsvorrichtung (1) translatorisch beweglich befestigten Bolzen (7), der dazu bestimmt ist, die Lenksäule gegen Drehung zu blockieren;
- einen Schliesszylinder (9), der mit der Diebstahlsicherungsvorrichtung (1) fest verbunden und dazu angeordnet ist, den Bolzen (7) zu verschieben;
- Blockiermittel (17), die bei Trennung des Schliesszylinders (9) von der Diebstahlsicherungsvorrichtung (1) zwischen einer Ruhestellung und einer Aktivstellung, in der die Blockiermittel (17) den Bolzen (7) gegen eine translatorische Bewegung blockieren, verschiebbar sind;
- Mittel (19) zum Halten der Blockiermittel (17) in ihrer Aktivstellung zum Beschleunigen einer Positionsänderung der Blockiermittel (17) aus ihrer Aktivstellung;
**dadurch gekennzeichnet, dass** die Diebstahlsicherungsvorrichtung (1) des Weiteren Folgendes umfasst: die Blockiermittel (17), die eine Scheibe (21) und erste Federmittel (23), die die Scheibe (21) in die Aktivstellung vorspannen können, umfassen, und die Haltemittel (19), die einen Bügel (31) und zweite Federmittel (33), die den Bügel (31) in eine Position vorspannen können, in der der Bügel (31) die Blockiermittel (17) in der Aktivstellung hält, umfassen.

2. Diebstahlsicherungsvorrichtung nach Anspruch 1, wobei die Scheibe (21) ein Fenster (24) begrenzt, in das der Bolzen (7) eingeführt werden kann, wobei die Scheibe (21) des Weiteren so angeordnet ist, dass sie, wenn der Bolzen (7) in das Fenster (24) der Scheibe (21) eingeführt ist, in Aktivstellung in einer Nut (25) aufgenommen wird, die in dem Bolzen (7) ausgebildet ist.

3. Diebstahlsicherungsvorrichtung nach einem der Ansprüche 1 oder 2, wobei die Scheibe (21) zwei Ansätze (29) umfasst, die dazu angeordnet sind, die ersten Federmittel (23) zu führen, wenn die ersten Federmittel (23) die Scheibe (21) in die Aktivstellung vorspannen.

4. Diebstahlsicherungsvorrichtung nach einem der Ansprüche 2 oder 3, wobei die Scheibe (21) zwei Kerben (41) an zwei das Fenster (24) begrenzenden Säulen umfasst, wobei die Kerben als Bruchzonen der Scheibe (21) wirken.

5. Diebstahlsicherungsvorrichtung nach einem der Ansprüche 1 bis 4, wobei die Scheibe (21) dazu angeordnet ist, durch einen mit dem Schliesszylinder (9) verbundenen Zapfen (15) in der Ruhestellung gehalten zu werden, so dass, wenn der Schliesszylinder (9) von der Diebstahlsicherungsvorrichtung getrennt ist, der Zapfen (15) verschoben wird und dabei die Scheibe (21) freigibt.

6. Diebstahlsicherungsvorrichtung nach einem der vorhergehenden Ansprüche, wobei der Bügel (31) zwei Schenkel (37) umfasst, die jeweils einen vorstehenden inneren Abschnitt (39) aufweisen, der dazu ausgeführt ist, jeweils mit den Ansätzen (29) der Scheibe (21) in Kontakt zu kommen.

7. Diebstahlsicherungsvorrichtung nach dem vorhergehenden Anspruch, wobei die Kontaktfläche der vorstehenden inneren Abschnitte (39) einen niedrigen Reibungskoeffizienten aufweist, so dass die Übertragung der Querbeanspruchungen von der Scheibe (21) auf den Bügel (31) eingeschränkt wird.

8. Diebstahlsicherungsvorrichtung nach einem der Ansprüche 1 bis 6, wobei die ersten Federmittel (23) und die zweiten Federmittel (33) mit der Scheibe (21) bzw. dem Bügel (31) fest verbundene elastische Blätter bilden.

9. Diebstahlsicherungsvorrichtung nach einem der vorhergehenden Ansprüche, die Folgendes umfasst:
- einen Diebstahlsicherungskörper (5), der zum Aufnehmen des Schliesszylinders (9) angeordnet ist, wobei der Diebstahlsicherungskörper (5) aus einem leichten Material hergestellt ist, wie einer Magnesiumlegierung oder einem glasfaserverstärkten Hochleistungskunststoff;
- eine Halbschelle (3a), die mit dem Diebstahlsicherungskörper (5) fest verbunden ist und in der der Bolzen (7) translatorisch beweglich ist, wobei die Halbschelle (3a) aus einem widerstandsfähigen Material hergestellt ist, wie ZAMAK (eingetragenes Warenzeichen).

10. Lenksäule für ein Kraftfahrzeug, **dadurch gekennzeichnet, dass** sie eine Diebstahlsicherungsvorrichtung nach einem der Ansprüche 1 bis 9 umfasst.

## Claims

1. Antitheft device for a steering column of a motor vehicle, including:
- a bolt (7) mounted so as to be moveable in translation in the antitheft device (1) to block movement in rotation of the steering column;
- a lock (9) fastened to the antitheft device (1) and arranged to move the bolt (7);
- locking means (17) moveable in the event of separation of the lock (9) and the antitheft device (1) between a rest position and an active position in which the locking means (17) block movement in translation of said bolt (7); and
- means (19) for holding the locking means (17) in their active position to prevent a change of position of said locking means (17) from their active position; **characterized in that** the antitheft device (1) further includes:
- the locking means (17) including a plate (21) and first spring means (23) for urging said plate (21) toward the active position, and the holding means (19) including a bracket (31) and second spring means (33) for urging said bracket (31) toward a position in which the bracket (31) holds the locking means (17) in the active position.

2. Antitheft device according to Claim 1 wherein the plate (21) defines a window (24) into which the bolt (7) is able to be introduced, said plate (21) being further adapted to be accommodated, in the active position, in a groove (25) formed in said bolt (7) when it is introduced into the window (24) of the plate (21).

3. Antitheft device according to either of Claims 1 and 2 wherein the plate (21) includes two lugs (29) for guiding the first spring means (23) when said first spring means (23) urge said plate (21) toward the active position.

4. Antitheft device according to either of Claims 2 and 3 wherein the plate (21) includes two notches (41) on two uprights delimiting the window (24), said notches serving as break-out areas of the plate (21).

5. Antitheft device according to any one of Claims 1 to 4 wherein the plate (21) is adapted to be held in the rest position by a pin (15) connected to the lock (9) so that when the lock (9) is disengaged from the antitheft device the pin (15) moves, releasing the plate (21).

6. Antitheft device according to any one of the preceding claims wherein the bracket (31) includes two branches (37) each having an inner projection (39) intended to come into contact with the respective lugs (29) of the plate (21).

7. Antitheft device according to the preceding claim wherein the contact surface of the internal projections (39) has a low coefficient of friction so as to limit the transmission of transverse loads from the plate (21) to the bracket (31).

8. Antitheft device according to any one of Claims 1 to 6 wherein the first spring means (23) and the second spring means (33) form leaf springs fastened to the plate (21) and the bracket (31), respectively.

9. Antitheft device according to any one of the preceding claims including:
- an antitheft body (5) for receiving the lock (9), said antitheft body (5) being made from a lightweight material such as a magnesium alloy or a high-performance glassfiber-reinforced plastic material;
- a half-collar (3a) fastened to the antitheft body (5) and in which the bolt (7) is movable in translation, said half-collar (3a) being made from a strong material such as Zamak^{™}.

10. Steering column for a motor vehicle **characterized in that** it includes an antitheft device according to any one of Claims 1 to 9.
